# EUROPÄISCHE PATENTSCHRIFT

(11) **EP 1 058 028 B1**
(45) Veröffentlichungstag und Bekanntmachung des Hinweises auf die Patenterteilung: **27.07.2005**
(21) Anmeldenummer: 00110331.6
(22) Anmeldetag: 13.05.2000
(51) Int. Cl.: F16F 15/139

(54) **Torsionsschwingungsdämpfer sowie Verfahren zur Herstellung eines Torsionsschwingungsdämpfers**
Torsional vibration damper and its method of production
Amortisseur de vibrations torsionelles et sa méthode de production

(30) Priorität: 04.06.1999 DE 19925487; 27.08.1999 DE 19940793
(43) Veröffentlichungstag der Anmeldung: 06.12.2000
(60) Teilanmeldung: 05011837.1
(73) Patentinhaber: Rohs-Voigt Patentverwertungsgesellschaft mbH, 52351 Düren (DE)
(72) Erfinder: Heidingsfeld, Dietmar, Dipl.-Ing., 52078 Aachen (DE)
(74) Vertreter: Castell, Klaus, Dr.-Ing.

(56) Entgegenhaltungen:
- EP-A- 0 863 330
- WO-A-99/22158
- DE-A- 3 901 571
- DE-A- 4 235 636
- DE-A- 4 420 934
- DE-A- 19 817 906
- US-A- 1 840 655
- US-A- 5 072 818
- US-A- 5 569 088
- US-A- 5 873 445

## Beschreibung

Die Erfindung betrifft einen Torsionsschwingungsdämpfer mit zwei gegeneinander drehbeweglich gelagerten Massen sowie ein Verfahren zur Herstellung eines Torsionsschwingungsdämpfers.

Derartige Torsionsschwingungsdämpfer sind in einer Vielzahl von konkreten Ausführungsformen bekannt. Ein wesentlicher Schwerpunkt bei der baulichen Gestaltung derartiger Torsionsschwingungsdämpfer liegt darin, dass die Dämpfungseigenschaften eines derartigen Torsionsschwingungsdämpfers in geeigneter Weise beeinflusst werden sollen. Beispielsweise ergibt sich die Forderung, dass bei kleinen Drehamplituden zwischen den Massen nur wenig Dämpfung auftreten soll, während bei großen Amplituden eine hohe Dämpfung erwünscht ist. Gleichzeitig soll bei großen Drehgeschwindigkeiten eine hohe Dämpfung auftreten, während bei niedrigen Drehgeschwindigkeiten nur wenig Dämpfung erfolgen soll.

So ist es aus dem nächstliegenden Stand der Technik, der US 5,072,8,818 sowie, aus der DE 198 17 906 A1 und aus der US 5,569,088 bekannt, Torsionsschwingungsdämpfer mit zwei gegeneinander drehbeweglich gelagerten Massen vorzusehen, bei welchen eine zwischen den Massen wirksame Reibeinrichtung einen in einer wenigstens teilweise mit einem viskosen Zusatzmittel gefüllten Kammer angeordneten Keil umfasst.

Es ist Aufgabe vorliegender Erfindung, einen Torsionsschwingungsdämpfer bereitzustellen, der auf möglichst einfache konstruktive Weise eine hohe Variabilität in der Anpassung der Dämpfungscharakteristik ermöglicht.

Als Lösung schlägt die Erfindung einen Torsionsschwingungsdämpfer mit den Merkmalen des Anspruchs 1 vor, sowie ein Verfahren mit den Merkmalen des Anspruchs 26 zur Herstellung eines derartigen Torsionsschwingungsdämpfers.

Im vorliegenden Zusammenhang bezeichnet der Begriff "mitschleppend" eine Baugruppe, die derart zwischen den beiden Massen angeordnet ist, dass diese im Rahmen einer möglichen Relativbewegung der beiden Massen zueinander dieser Bewegung folgen kann, wenn die Reibung vernachlässigt wird. Anders ausgedrückt, behindert bei Vernachlässigung der Reibung eine mitschleppende Baugruppe die Relativbewegung zwischen den beiden drehbeweglich gelagerten Massen des Torsionsschwingungsdämpfers nicht.

Darüber hinaus beschreibt im vorliegenden Zusammenhang der Begriff "Keil" eine Baugruppe mit zwei einander gegenüberliegenden Oberflächenbereichen, deren Abstand sich entlang der Oberflächenbereich verändert. Insbesondere kann ein derartiger Keil zwischen zwei Reibflächen vorgesehen sein, deren Abstand sich entlang des Umfangs des Torsionsschwingungsdämpfers verändert. Vorteilhafterweise verändert sich der Abstand der Reibflächen gleichgerichtet wie der Abstand der entsprechenden Keilflächen, wobei der Grad der Veränderungen jedoch nicht identisch gewählt werden muss, sondern den jeweiligen Erfordernissen angepasst werden kann.

Insbesondere kann der Keil zwischen zwei Reibflächen mit im Wesentlichen axialen Oberflächen angeordnet sein. Eine derartige Anordnung bedingt ein im Wesentlichen radiales Fließen der bei einem Verkeilen auftretenden Kräfte. Derartige radial gerichtete Kräfte können bei im Wesentlichen drehsymmetrischen Torsionsschwingungsdämpfern besonders einfach kompensiert werden.

Auf komplexe Oberflächenberechnungen und Oberflächenbearbeitungen kann verzichtet werden, wenn wenigstens eine der Oberflächen, sei es eine Keilfläche oder eine Reibfläche, zumindest im Bereich der Wechselwirkung zwischen Keil und Reibfläche teilzylinderförmig ausgebildet ist. Im vorliegenden Zusammenhang beschreibt der Begriff teilzylinderförmig einen Oberflächenbereich, dessen Gestaltung einem Mantelsegment eines Zylinders entspricht.

Einerseits kann wenigstens eine der zylinderförmig ausgebildeten Oberflächen eine Zylinderachse, die der Hauptdrehachse des Torsionsschwingungsdämpfers entspricht, aufweisen. Hierdurch kann, wie unmittelbar ersichtlich, eine Oberfläche bereitgestellt werden, die ein Mitschleppen ermöglicht.

Andererseits kann wenigstens eine der zylinderförmig ausgebildeten Oberflächen bezüglich der Rotationsachse des Torsionsschwingungsdämpfers parallelversetzt angeordnet sein. Hierdurch lassen sich auf konstruktiv verhältnismäßig einfache Art und Weise abstandsveränderliche Oberflächen bereitstellen, insbesondere wenn diese einer anderen teilzylinderförmigen Oberfläche mit einem anderen Radius und/oder mit einer anderen Achsenlage zugeordnet sind.

In entsprechender Weise kann der Keil wenigstens eine teilzylinderförmige Keilfläche aufweisen. Hierbei kann der Radius einem entsprechenden Oberflächenbereich einer entsprechenden Reibfläche, an welcher der Keil anliegt, entsprechen. Der identische Radius bedingt dann, dass der Keil über eine verhältnismäßig große Oberfläche in Wechselwirkung mit der Reibfläche treten kann, wodurch vorteilhafte Reibeigenschaften erzielt werden können.

Mit ihrer großen Bandbreite hinsichtlich der Dämpfungscharakteristik eignet sich die erfindungsgemäße Reibeinrichtung insbesondere als Zusatzreibeinrichtung eines Torsionsschwingungsdämpfers, bei welchem die beiden Massen mittels wenigstens einer Feder-Reib-Einrichtung miteinander wirkverbunden sind. In einem derartigen Falle umfasst der Torsionsschwingungsdämpfer somit einerseits eine Feder-Reib-Einrichtung, welche einerseits ein elastisches Rückstellmoment in Richtung auf eine Ruhelage des Torsionsschwingungsdämpfers und andererseits aufgrund der Reibung dämpfende Eigenschaften aufweist, sowie eine erfindungsgemäße Reibeinrichtung mit einem mitschleppenden Keil als separate Baugruppe.

Vorteilhafterweise ist die Reibeinrichtung bis auf die Eigenelastizität des Keils sowie der entsprechenden Reibflächen, die mit dem Keil wechselwirken, starr ausgebildet. Dieses bedeutet, dass die erfindungsgemäße Reibeinrichtung insbesondere keinerlei federelastische Zusatzeinrichtung, wie Spiralfedern oder Federbügel, umfassen soll.

Der erfindungsgemäße Keil ist als Doppelkeil ausgebildet. Hierdurch lässt sich auf baulich verhältnismäßig einfache Weise der Tatsache Rechnung tragen, dass Torsionsschwingungen in verschiedenen Drehrichtungen auftreten können. Darüber hinaus ermöglicht ein derartiger Doppelkeil, dass der Doppelkeil aufgrund einer Relativbewegung der beiden Massen des Torsionsschwingungsdämpfers zu einer Kippbewegung angeregt werden kann, die eine Keilwirkung bzw. eine Reibwirkung vorteilhaft beeinflusst.

Ferner weist der Doppelkeil erfindungsgemäß eine Nierenform auf. Eine derartige Form ist verhältnismäßig kompakt und kann somit relativ große Kräfte aufnehmen. Darüber hinaus kann eine derartige Form in konstruktiv einfacher Weise angepasst werden, die ein Mitschleppen erlaubt.

Der Doppelkeil kann zumindest zwei teilzylinderförmige, voneinander beabstandete Keilflächen mit im Wesentlichen identischem Radius aufweisen. Derartige Oberflächenbereiche können ohne weiteres an einer durchgehenden zylindrischen Reibfläche des übrigen Torsionsschwingungsdämpfers anliegen, wodurch auf konstruktiv verhältnismäßig einfache Weise die Gesamtanordnung aufgebaut werden kann.

Insbesondere können die beiden Keilflächen um dieselbe Achse ausgebildet sein, so dass der Doppelkeil mit beiden teilzylinderförmigen Keilflächen auf einer durchgehenden zylinderförmigen Reibfläche aufliegen kann.

Andererseits können die beiden Keilflächen auch um zueinander parallel versetzte Achsen ausgebildet sein. Hierdurch wird gewährleistet, dass der Doppelkeil bei einem Verkippen desselben mit einer möglichst großen Oberfläche an der Reibfläche anliegen kann.

Zwischen diesen beiden Keilflächen kann eine Ausnehmung vorgesehen sein, wodurch einerseits ein Verkippen und andererseits ein unstetiger Übergang zwischen zwei an einer Reibfläche anliegenden Oberflächenbereichen vermieden werden kann. Ebenso ist es auch möglich, zwischen diesen beiden Keilflächen eine teilzylinderförmige Verbindungsfläche mit einem kleineren Radius als dem Radius der beiden Keilflächen vorzusehen. Auch hierdurch lassen sich Unstetigkeiten reduzieren, dieses insbesondere dann, wenn an dem Übergang zwischen Keilfläche und Verbindungsfläche dieselbe Tangente gewählt wird.

Insbesondere kann der Doppelkeil derart angeordnet bzw. ausgebildet sein, dass er bei einer Relativbewegung der beiden Massen eine Kippbewegung bezüglich der Achse des Torsionsschwingungsdämpfers ausführt. Über eine derartige Kippbewegung können dann geeignete Oberflächenbereiche des Doppelkeils in Reibkontakt mit entsprechenden Reibflächen gebracht werden.

Damit die Reibeinrichtung auch bei kleinsten Verdrehwinkeln bereits eine Dämpfung bewirkt, diese Dämpfung aber in kontrollierbarer Weise ausreichend niedrig ausfällt, kann der Keil in einer wenigstens teilweise mit einem viskosen Zusatzmittel gefüllten Kammer angeordnet sein. Hierbei sorgt das viskose Zusatzmittel für die notwendige Initialkraft. Insbesondere gewährleistet eine derartige Initialkraft zuverlässig, dass der Keil nicht in undefinierter Weise mitgeschleppt wird, bevor seine verkeilende und selbstverstärkende Wirkung einsetzt. Das viskose Zusatzmittel ermöglicht eine geschwindigkeitsabhängige Reibung, die auch bei kleinsten Schwingungsamplituden bereits wirksam ist. Darüber hinaus verhindert diese Anordnung in zuverlässiger Weise, dass ein unnötiges Freispiel, welches die Dämpfung in unvorhersehbarer Weise beeinflusst, auftritt.

Der Keil kann wenigstens einen Vorsprung aufweisen. Hierdurch lässt sich der Widerstand gegen Scherkräfte des viskosen Zusatzmittels erhöhen, wodurch die Gesamtwirkung des viskosen Zusatzmittels entsprechend erhöht wird. Diese Wirkerhöhung folgt unmittelbar aus der größeren Angriffsfläche, die ein derartiger Vorsprung erzeugt. Darüber hinaus schafft der Vorsprung in einem den Keil umschließenden Raum bzw. in einer den Keil umschließenden Kammer ein vergrößertes Raumvolumen zur Aufnahme von viskosem Zusatzmittel.

Als viskoses Zusatzmittel können beispielsweise geeignete Fette Verwendung finden.

Vorzugsweise ist der wenigstens eine Vorsprung an einer Seite des Keils vorgesehen, die nicht als Keilfläche zur Anwendung kommt. Auf diese Weise wird die Keilfläche, die wirksam werden kann, nicht reduziert, während die vorteilhaften Wirkungen eines derartigen Vorsprungs genutzt werden können.

Insbesondere kann der Vorsprung in Axialrichtung weisen, wodurch einerseits in Umfangrichtung weisende Oberflächenbereiche, die besonders ausgeprägt mit dem viskosen Zusatzmittel wechselwirken, entstehen und andererseits eine Zusatzreibung an Wänden einer Kammer, welche den Keil umgibt, gewährleistet werden kann, die eine Keilwirkung, die in radialer Richtung stattfindet, nicht beeinträchtigt.

Eine verhältnismäßig einfache Montage bzw. Fertigung des Torsionsschwingungsdämpfers kann dadurch erreicht werden, dass die Kammer zumindest an einer radialen Seite zumindest teilweise durch ein Blech abgedeckt ist. Im vorliegenden Zusammenhang beschreibt der Begriff einer radialen Seite der Kammer, die durch eine radial gerichtete Oberfläche abgedeckt bzw. geschlossen werden kann. Dem entsprechend beschreibt der Begriff einer axialen Oberfläche eine Oberfläche, die eine zur Achse des Torsionsschwingungsdämpfers parallele Oberflächenkomponente aufweist.

Ebenso ist es möglich, dass die Kammer zumindest an einer radialen Seite zumindest teilweise durch ein Blech abgedeckt ist. Auch hierdurch lässt sich die Montage bzw. Fertigung des Torsionsschwingungsdämpfers vorteilhaft vereinfachen. Insbesondere kann an derartigen Blechen Profilierungen wie beispielsweise eine Ausbildung von nicht rotationssymmetrischen Zylinderformen oder ähnliches, leicht vorgenommen werden.

Das Blech kann aus Stabilitätsgründen bzw. um eine Verbindung mit anderen Baugruppen zu ermöglichen, eine Bördelung aufweisen. Insbesondere ist es möglich, das Blech derart zu bördeln, dass es mittels der Bördelung an einer der Massen des Torsionsschwingungsdämpfers fixiert ist. Beispielsweise kann die Bördelung einen im Wesentlichen radialen Reibschluss zwischen dem Blech und der Masse bilden.

Es versteht sich, dass eine derartige Bördelung, insbesondere wenn sie in vorbeschriebener Weise einer Fixierung dient, auch unabhängig von den übrigen Merkmalen des Torsionsschwingungsdämpfers vorteilhaft ist.

Bei einer derartigen Anordnung kann das Blech zunächst an der entsprechenden Masse positioniert und anschließend derart verbördelt werden, dass zwischen dem Blech und der Masse ein derartiger Reibschluss entsteht. Es ist auch denkbar, dass das Blech zunächst vorgebördelt und dann entsprechend positioniert wird, bevor eine abschließende Bördelung zu einem derartigen Reibschluss führt.

Weist der Torsionsschwingungsdämpfer zumindest zwei Kammern auf, die jeweils an wenigstens einer ihrer Seiten zumindest teilweise durch ein Blech abgedeckt sind, ist es vorteilhaft, die beiden Blechabdeckungen aus demselben Material zu fertigen und die Kammern sowie die Blechabdeckungen derart auszugestalten, dass das eine Blech radial innerhalb des anderen Blechs angeordnet werden kann, ohne dass die beiden Bleche einander überlappen. Dieses gilt insbesondere für Kammern, die durch um die Achse des Torsionsschwingungsdämpfers umlaufende Bleche abgedeckt werden.

Hierbei bezeichnet der Begriff "in gestrecktem Zustand", dass etwaige Abwinkelungen, Ausformungen oder ähnliches aus den Blechen entfernt gedacht sind.

Bei einer derartigen Anordnungen ist es möglich, dass beide Blechabdeckungen aus demselben Rohling gefertigt werden, bzw. dass die eine Blechabdeckung aus einem Rohling gefertigt wird, aus welchem eine Blechabdeckung, die der zweiten Blechabdeckung entspricht, gefertigt wurde. Auf diese Weise lassen sich zur Herstellung der Blechabdeckungen benötigte Materialmengen einsparen, da weniger Abfall entsteht.

Sind die Bleche aus einem einzigen Rohling ausgeformt, können sie dann - gegebenenfalls auch in einem einzigen Arbeitsschritt - entsprechend einer Formgebung unterzogen werden.

Es versteht sich, dass hierbei nicht unbedingt Blechabdeckungen, die aus einem identischen Rohling gefertigt wurden, an demselben Torsionsschwingungsdämpfer zu Anwendung kommen müssen. Vielmehr reicht es aus, dass die Blechabdeckungen eines Torsionsschwingungsdämpfers aus demselben Material bestehen und aus einem einigen Rohling gefertigt werden hätten können.

Es versteht sich, dass eine derartige Anordnung bzw. ein derartiges Herstellungsverfahren eines Torsionsschwingungsdämpfers auch unabhängig von den übrigen Merkmalen des Torsionsschwingungsdämpfers vorteilhaft ist, solange zwei Kammern durch Bleche abgedeckt werden sollen. Dieses insbesondere dann, wenn die Bleche um die Bleche des Torsionsschwingungsdämpfers umlaufen und die Kammern an verschiedenen radialen Abständen des Torsionsschwingungsdämpfers vorgesehen sind.

Darüber hinaus kann ein derartiges Blech, welches mit einer der Massen fest verbunden sein soll, zwischen zwei dieser Baugruppen fixiert werden. Dieses kann beispielsweise durch eine Schraubverbindung, die beiden Baugruppen miteinander fixiert, geschehen. Hierdurch braucht für das Fixieren kein extra Arbeitsschritt vorgesehen sein. Die hiermit gewonnene Montageerleichterung rechtfertigt einen höheren Aufwand, der für die Genauigkeitserhöhung, die durch ein Anstieg der Fertigungstoleranzen bedingt ist, benötigt wird. Dieses gilt insbesondere dann, wenn die beiden Baugruppen eine Lagerschale, vorzugsweise für die zweite Masse, bilden. Hierbei kann dann das Blech zumindest eine Seite der Lagerschale bilden. Da bei einer Lagerschale häufig Nacharbeiten vorgenommen werden müssen, uni Montagetoleranzen auszugleichen, lassen sich die ansonsten unerwünschten Toleranzerhöhungen, die durch die unerwünschte Trennfuge in der Lagerschale bedingt sind, ausgleichen.

Ein derartiges Blech kann auch in einer Nut befestigt sein. Vorzugsweise ist eine derartige Nut radial nach innen gerichtet ausgebildet. Zur Montage braucht somit das Blech lediglich positioniert und wenigstens teilweise in die Nut verpresst werden. Um die Abdichtung des Pressblechs zu erhöhen, kann zwischen Blech und der entsprechenden, dieses Blech haltenden Baugruppe ein Dichtmittel eingebracht werden. Dieses können beispielsweise Silikonkautschuk oder andere gummielastische Dichtmittel sein. Ebenso kann eine Flächendichtung bzw. eine Papierdichtung vorgesehen sein.

Es versteht sich, dass auch eine derartige Fixierung des Blechs unabhängig von den übrigen Merkmalen des Torsionsschwingungsdämpfers vorteilhaft ist.

Weitere Vorteile, Ziele und Eigenschaften eines erfindungsgemäßen Torsionsschwingungsdämpfers werden anhand der Beschreibung anliegender Zeichnung erläutert. In der Zeichnung zeigen:
- Figur 1: einen erfindungsgemäßen Torsionsschwingungsdämpfer im Schnitt entlang der Linie I-I nach Figur 2,
- Figur 2: den Torsionsschwingungsdämpfer nach Figur 1 im Schnitt durch die Torsionsschwingungsdämpferachse,
- Figur 3: einen zweiten erfindungsgemäßen Torsionsschwingungsdämpfer in ähnlicher Darstellung wie Figur 1,
- Figur 4: eine Vergrößerung des Ausschnitts IV in Figur 3,
- Figur 5: den Torsionsschwingungsdämpfer nach Figur 3 im Schnitt durch die Torsionsschwingungsdämpferachse (mit verschiedenen Darstellungen der Keile: einem mittigen Schnitt, einem Schnitt durch die Vorsprünge sowie einer Aufsicht),
- Figur 6: einen dritten Torsionsschwingungsdämpfer in ähnlicher Darstellung wie Figuren 1 und 3,
- Figur 7: einen vierten Torsionsschwingungsdämpfer in ähnlicher Darstellung wie Figur 4, bei welchem ein Abdeckblech noch nicht befestigt ist und
- Figur 8: den Torsionsschwingungsdämpfer nach Figur 7 nach dem Einpressen des Abdeckblechs.

Jeder der in der Zeichnung dargestellte Torsionsschwingungsdämpfer weist eine Primärmasse 1 sowie eine Sekundärmasse 2 auf, die über eine Feder-Reib-Einrichtung 3 miteinander wirkverbunden sind. Hierbei ist die Sekundärmasse 2 in einer Lagerschale, die durch eine zweite Baugruppe 4 der Primärmasse 1 gebildet wird, drehbeweglich bezüglich der Primärmasse 1 gelagert. Derartige Torsionsschwingungsdämpfer sind an sich bekannt.

Erfindungsgemäß weist jeder dieser Torsionsschwingungsdämpfer Keile 5 auf, die in einer entsprechenden Kammer 6 angeordnet sind. Die Kammer 6 weist eine radial außenliegende zylindrische Reibfläche auf, an welcher die Keile 5 anliegen. Wie unmittelbar ersichtlich, können diese Keile bei zu vernachlässigender Reibung beliebig, insbesondere aber im Bereich der durch die Federeinrichtungen 3 ermöglichten Amplitude, mitgeschleppt werden.

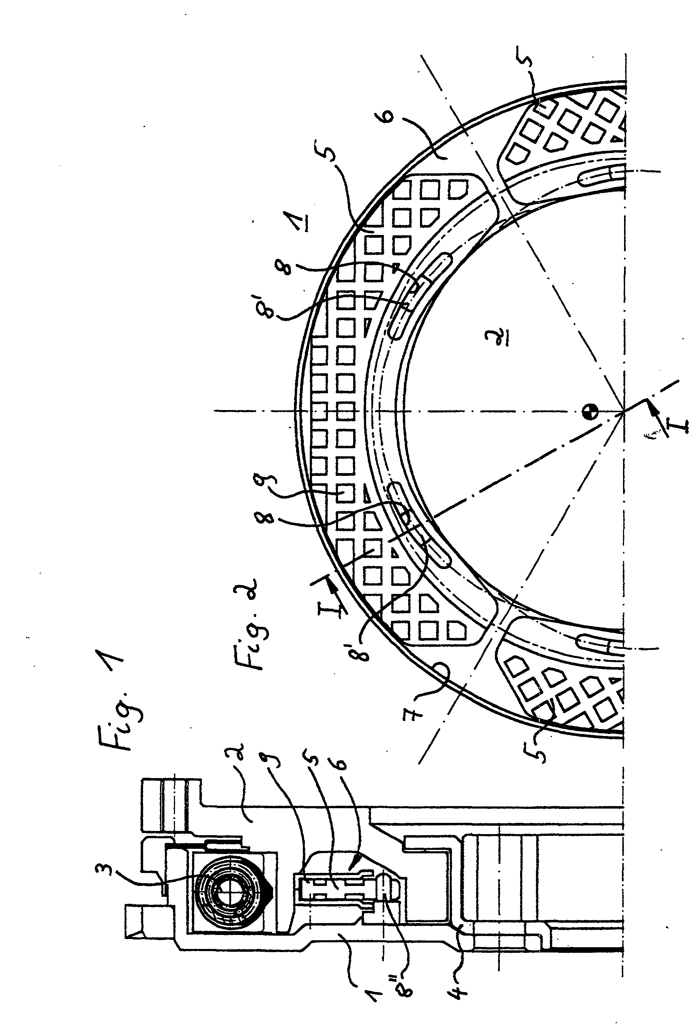

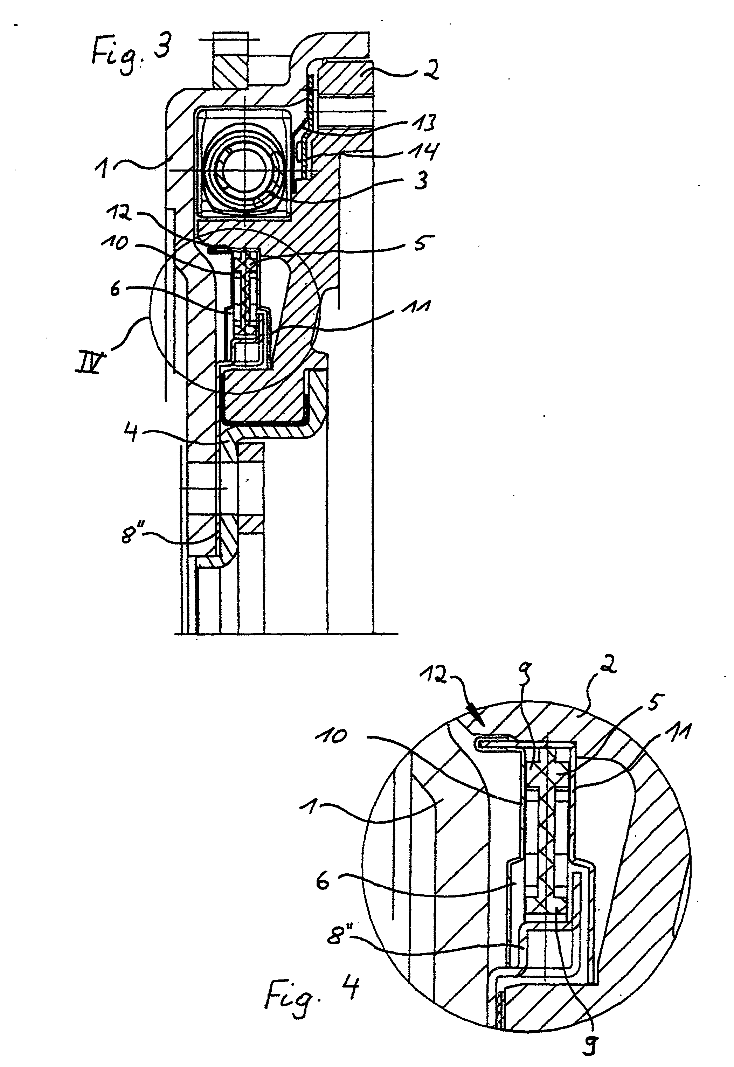

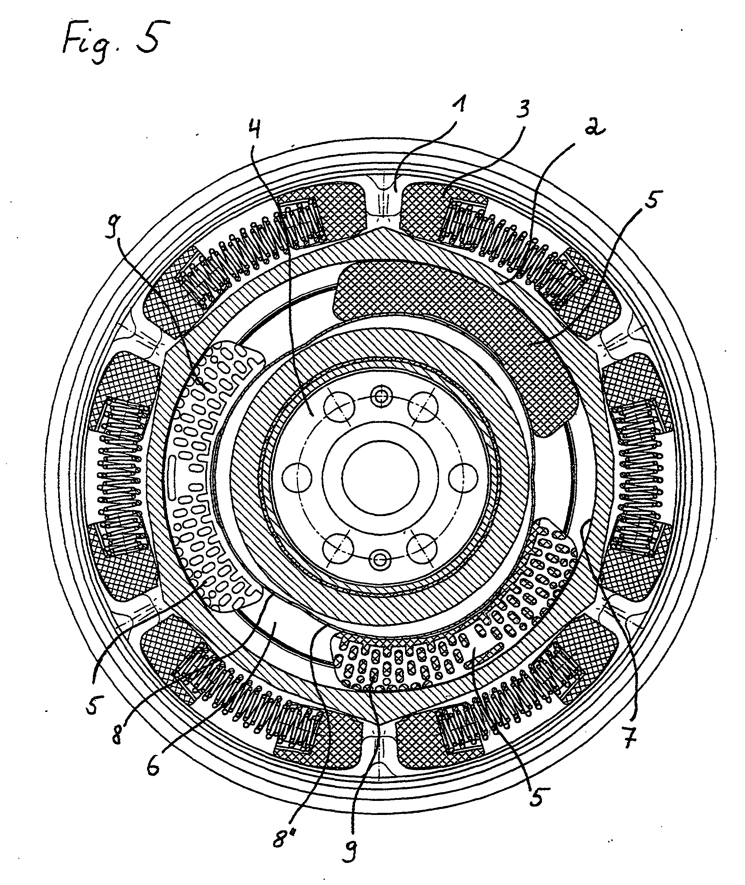

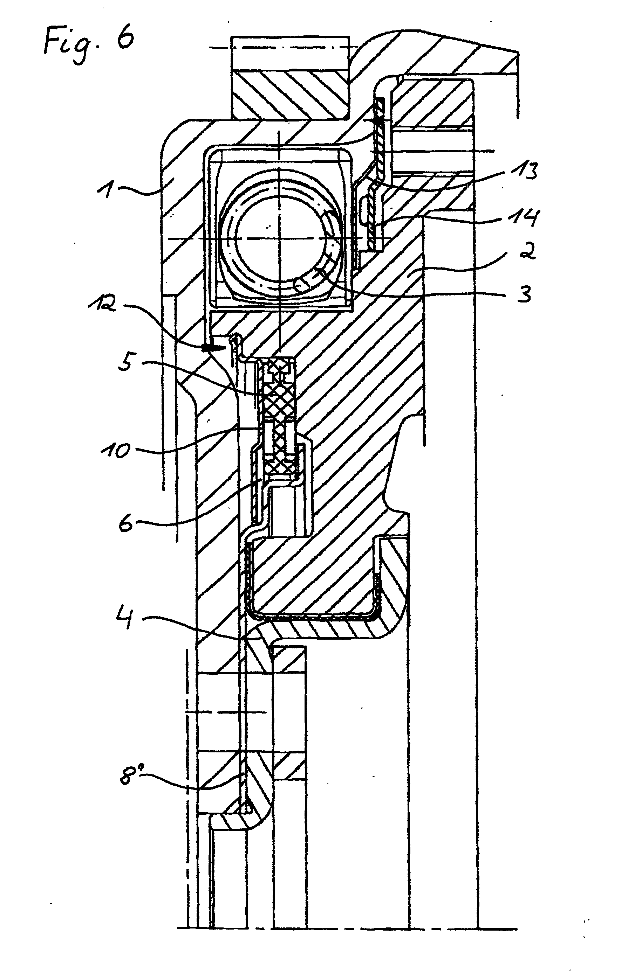

Darüber hinaus weist die Reibeinrichtung jedes der Torsionsschwingungsdämpfer Reibflächen 8 auf, die teilzylinderförmig, bezüglich der Rotationsachse des Torsionsschwingungsdämpfers parallel versetzt angeordnet sind. Hierbei sind diese Reibflächen bei dem in Figuren 1 und 2 dargestellten Ausführungsbeispiel an Mitnehmern 8' vorgesehen, die in entsprechende Ausnehmungen der Keile 5 eingreifen. Bei den in Figuren 3 bis 6 dargestellten Ausführungsbeispielen sind diese Reibflächen 8 an einer profilierten Blechscheibe 8" ausgestaltet, die zwischen den beiden Baugruppen 1 und 4 der Primärmasse angeordnet ist.

Wie unmittelbar ersichtlich ist jeder der Keile 5 als Doppelkeil ausgebildet und weist jeweils vier teilzylinderförmige Keilflächen auf. Hierbei weisen die radial außenliegenden Keilflächen denselben Radius wie die radial außenliegende Reibfläche 7 auf, wobei jedoch die Zylinderachse gegenüber der Achse des Torsionsschwingungsdämpfers parallel versetzt ist.

Wie ersichtlich, weist die Reibeinrichtung keine federnden Baugruppen auf, so dass sie bis auf die Eigenelastizität der Keile 5 bzw. der die Reibflächen 7 und 8 bildenden Baugruppen, starr ausgebildet ist.

Die Doppelkeile 5 weisen eine Nierenform auf, wobei durch die versetzten Zylinderachsen der äußeren Keilflächen eine Verkippung der Doppelkeile 5 bei einer Relativbewegung von Primärmasse 1, 4 und Sekundärmasse erfolgt. Zwischen den äußeren Keilflächen jedes Doppelkeils 5 sind Übergangsbereiche vorgesehen. Diese sind bei dem in Figuren 1 und 2 dargestellten Ausführungsform als rechteckförmige Fläche ausgestaltet, während bei den in Figuren 3 bis 6 dargestellten Ausführungsformen eine Zylinderfläche mit einem kleineren Radius als dem Radius der Reibfläche 7 gewählt ist. Diese Verbindungsfläche ist in Ihrem Radius sowie in Ihrer Achse derart angeordnet, dass am Übergang zwischen Verbindungsfläche und Keilfläche jeweils derselbe Neigungswinkel bzw. dieselbe Tangente auftritt.

Die Kammer 6 ist jeweils teilweise mit einem viskosen Zusatzmittel gefüllt. Darüber hinaus weist jeder der Keile 5 Vorsprünge 9 auf, die in axiale Richtung weisen. Hierdurch entstehen Oberflächenbereiche, die den Scherkräften des viskosen Zusatzmittels entgegenwirken, so dass der erfindungsgemäße Doppelkeil ohne Freispiel wirksam wird. Die Vorsprünge 9 sind dabei derart ausgebildet, dass sie bis an radiale Wandungen der Kammer 6 reichen, so dass auch an diesen Stellen eine Reibung gegeben ist. Zwischen den Vorsprüngen 9 entstehen Zwischenräume, die eine erhöhte Aufnahmekapazität für das viskose Zusatzmittel ermöglichen.

Wie aus Figuren 3, 4 und 6 ersichtlich, ist die Kammer 6 der in den Figuren 3 bis 6 dargestellten Ausführungsbeispiele in axialen Richtungen durch Bleche 10 bzw. 11 umgrenzt. Diese Bleche sind mit einer Bördelung 12 versehen, wobei diese Bördelung einen radialen Reibschluss mit der Sekundärmasse 2 bildet und auf diese Weise die Bleche 10 bzw. 11 an der Sekundärmasse fixiert.

Bei dem in Figuren 3 bis 5 dargestellten Ausführungsbeispiel werden in einer Vormontage die beiden Bleche 10 und 11 zunächst vorgebördelt. Anschließend werden diese an der Sekundärmasse in gewünschter Weise positioniert. Erst hiernach wird die Bördelung 12 vollendet und auf diese Weise der Reibschluss zwischen den Blechen 10 bzw. 11 mit der Sekundärmasse 2 erzeugt.

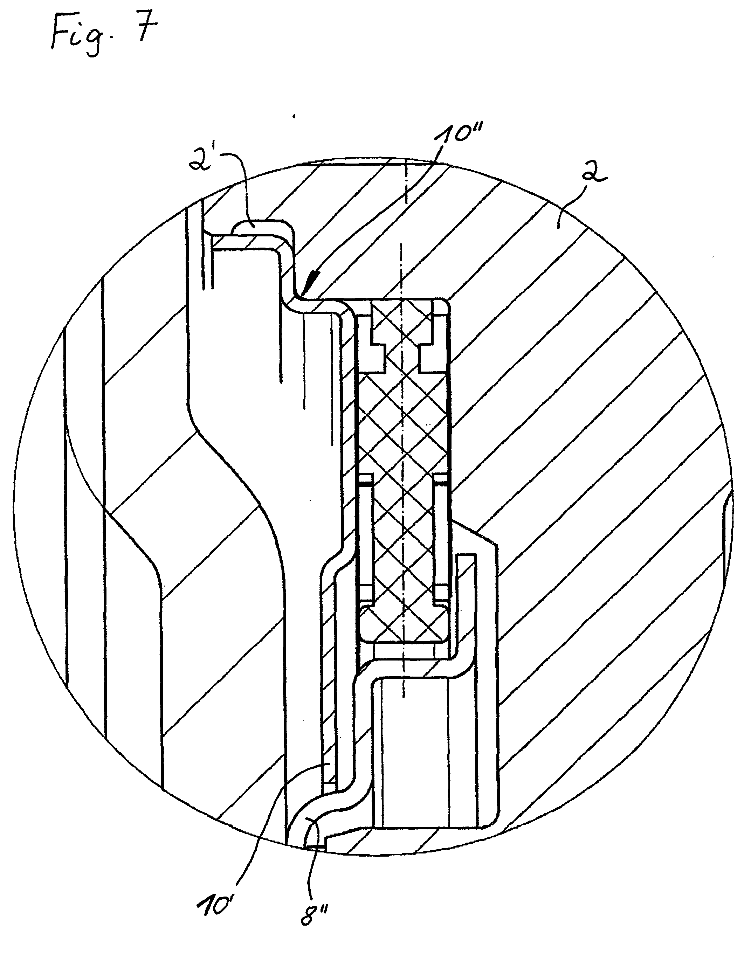

In ähnlicher Weise wird auch bei dem in Figur 6 dargestellten Ausführungsform das Blech 10 angebracht. Auch hier wird erst nach dem Positionieren des Bleches 10 der Reibschluss zwischen Sekundärmasse 2 und Blech 10 über die Bördelung 12 erzeugt.

Bei den in Figuren 3 bis 6 dargestellten Ausführungsbeispielen besteht das Blech 10 und ein Abdichtblech 13 für die Feder-Reib-Einrichtung 3 aus demselben Material. Selbiges gilt für das Blech 8" und ein Abdeckblech 14 der Feder-Reib-Einrichtung 3. Wie unmittelbar ersichtlich können die Bleche 10 und 13 bzw. 8" und 14 aus demselben Rohling gefertigt werden, so dass für die Bleche 8" bzw. 10 kein zusätzliches Material benötigt wird. Insofern ist für die erfindungsgemäße Reibeinrichtung bei dem in Figuren 3 bis 5 dargestellten Ausführungsbeispiel lediglich das Blech 11 als zusätzliche Kammerbegrenzung hinsichtlich des Materialaufwandes von Bedeutung. Bei dem in Figur 6 dargestellten Ausführungsbeispiel ist die Sekundärmasse in geeigneter Weise ausgeformt, so dass für die Kammerbildung 6 kein zusätzliches Material benötigt wird.

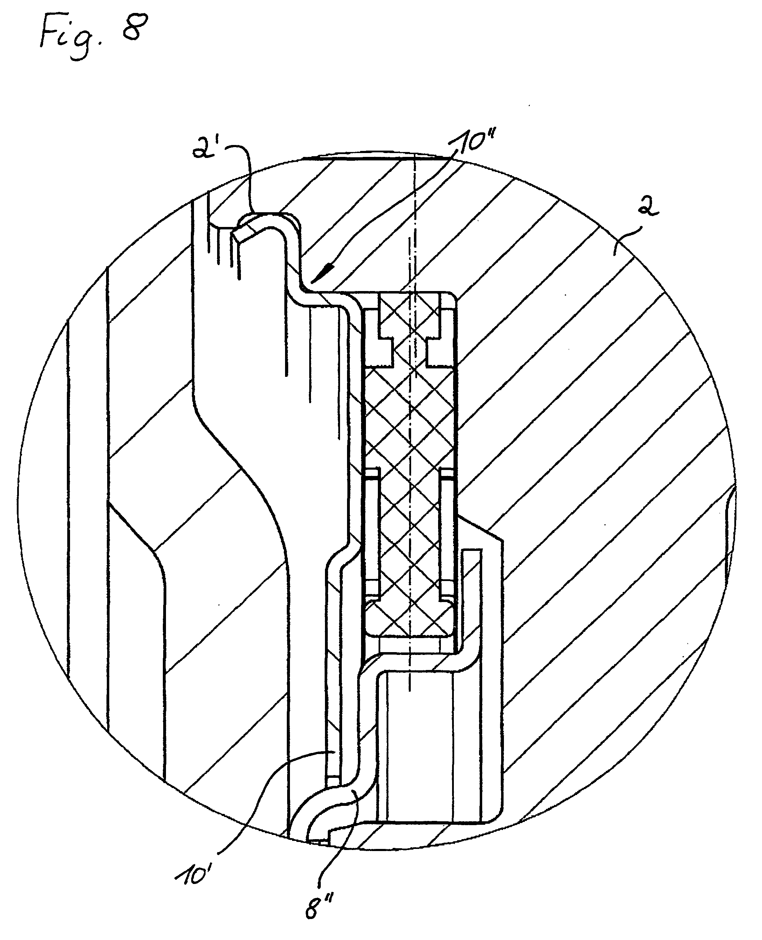

Bei dem in Figuren 7 und 8 dargestellten Ausführungsbeispiel ist ein Blech (10') in einer Nut (2') der Sekundärmasse (2) angeordnet. Hierbei zeigt Figur 7 die Anordnung vor dem Verpressen also unmittelbar nachdem das Blech (2') in seine Montageposition gebracht ist. Figur 8 zeigt die Anordnung nach dem Einpressen des Blechs (10') in die Nut (2'). Da eine derartige Einpressung nur an gewissen, um den Umfang verteilten Positionen erfolgt, zeigt Figur 7 die Anordnung an den Umfangspositionen, an denen eine Einpressung nicht vorliegt. Bei dieser Anordnung ist zur besseren Abdichtung in ein Knie (10") des Blechs (10') vor der Montage ein Dichtmittel, wie beispielsweise Silikonkautschuk, eingebracht.

## Patentansprüche

1. Torsionsschwingungsdämpfer mit zwei gegeneinander drehbeweglich gelagerten Massen (1, 4; 2) und einer zwischen den Massen (1, 4; 2) wirksamen Reibeinrichtung, die wenigstens einen mitschleppenden Keil (5), der in einer wenigstens teilweise mit einem viskosen Zusatzmittel gefüllten Kammer (6) angeordnet ist, umfasst, ***dadurch gekennzeichnet, dass*** der Keil (5) als eine Nierenform aufweisender Doppelkeil ausgebildet ist.

2. Torsionsschwingungsdämpfer nach Anspruch 1, ***dadurch gekennzeichnet, das*** der Keil (5) zwischen zwei Reibflächen (7, 8) mit im Wesentlichen axialer Oberfläche angeordnet ist.

3. Torsionsschwingungsdämpfer nach Anspruch 2, ***dadurch gekennzeichnet, dass*** wenigstens eine der Oberflächen (7, 8) zumindest im Bereich der Wechselwirkung zwischen Keil (5) und Reibfläche (7,8) teilzylinderförmig ausgebildet ist.

4. Torsionsschwingungsdämpfer nach Anspruch 3, ***dadurch gekennzeichnet, dass*** wenigstens eine der teilzylinderförmig ausgebildeten Oberflächen bezüglich einer Rotationsachse des Torsionsschwingungsdämpfers parallelversetzt angeordnet ist.

5. Torsionsschwingungsdämpfer nach einem der Ansprüche 1 bis 4, ***dadurch gekennzeichnet, dass*** der Keil (5) wenigstens eine teilzylinderförmige Keilfläche aufweist, deren Radius dem Radius eines entsprechenden Oberflächenbereiches der entsprechenden Reibfläche (7, 8) entspricht.

6. Torsionsschwingungsdämpfer nach einem der Ansprüche 1 bis 5, ***dadurch gekennzeichnet, dass*** die Reibeinrichtung eine Zusatzreibeinrichtung eines Torsionsschwingungsdämpfers ist, bei welchem die beiden Massen (1, 4; 2) mittels wenigstens einer Feder-Reib-Einrichtung (3) miteinander wirkverbunden sind.

7. Torsionsschwingungsdämpfer nach einem der Ansprüche 1 bis 6, ***dadurch gekennzeichnet, dass*** die Reibeinrichtung bis auf die Eigenelastizität des Keils (3) sowie der entsprechenden Reibflächen (7, 8), die mit dem Keil (3) wechselwirken, starr ausgebildet ist.

8. Torsionsschwingungsdämpfer nach einem der Ansprüche 1 bis 7, ***dadurch gekennzeichnet, dass*** der Doppelkeil zumindest zwei teilzylinderförmige, von einander beabstandete Keilflächen mit im Wesentlichen identischem Radius aufweist.

9. Torsionsschwingungsdämpfer nach Anspruch 8, ***dadurch gekennzeichnet, dass*** die beiden Keilflächen um dieselbe Achse ausgebildet sind.

10. Torsionsschwingungsdämpfer nach Anspruch 8, ***dadurch gekennzeichnet, dass*** die beiden Keilflächen um zueinander parallel versetzte Achsen ausgebildet sind.

11. Torsionsschwingungsdämpfer nach einem der Ansprüche 8 bis 10, ***dadurch gekennzeichnet, dass*** zwischen den beiden Keilflächen eine Ausnehmung vorgesehen ist.

12. Torsionsschwingungsdämpfer nach einem der Ansprüche 8 bis 10, ***dadurch gekennzeichnet, dass*** zwischen den beiden Keilflächen eine teilzylinderförmige Verbindungsfläche mit einem kleineren Radius als der Radius der Keilflächen vorgesehen ist.

13. Torsionsschwingungsdämpfer nach einem der Ansprüche 1 bis 12, ***dadurch gekennzeichnet, dass*** der Doppelkeil derart angeordnet ist, dass er bei einer Relativbewegung der beiden Massen (1, 4; 2) eine Kippbewegung bezüglich einer Achse des Torsionsschwingungsdämpfers ausführt.

14. Torsionsschwingungsdämpfers nach einem der Ansprüche 1 bis 13, ***dadurch gekennzeichnet, dass*** der Keil (5) wenigstens einen Vorsprung (9) aufweist.

15. Torsionsschwingungsdämpfer nach Anspruch 14, ***dadurch gekennzeichnet, dass*** der Vorsprung an einer anderen Seite als der Keilfläche vorgesehen ist.

16. Torsionsschwingungsdämpfer nach Anspruch 14 oder 15, ***dadurch gekennzeichnet, dass*** der Vorsprung in axiale Richtung weist.

17. Torsionsschwingungsdämpfer nach einem der Ansprüche 1 bis 16, ***dadurch gekennzeichnet, dass*** die Kammer (6) zumindest an einer radialen Seite zumindest teilweise durch ein Blech (10, 11; 10') abgedeckt ist.

18. Torsionsschwingungsdämpfer nach einem der Ansprüche 1 bis 17, ***dadurch gekennzeichnet, dass*** die Kammer (6) zumindest an einer axialen Seite zumindest durch ein Blech (8") abgedeckt ist.

19. Torsionsschwingungsdämpfer nach Anspruch 17 oder 18, ***dadurch gekennzeichnet, dass*** das Blech (10, 11; 10') eine Bördelung (12) aufweist.

20. Torsionsschwingungsdämpfer nach Anspruch 19, ***dadurch gekennzeichnet, dass*** das Blech (10, 11; 10') mittels der Bördelung (12) an einer der Massen (2) fixiert ist.

21. Torsionsschwingungsdämpfer nach einem der Ansprüche 18 bis 20, ***dadurch gekennzeichnet, dass*** die Bördelung (12) einen im Wesentlichen radialen Reibschluss zwischen Blech und Masse bildet.

22. Torsionsschwingungsdämpfer nach einem der Ansprüche 1 bis 21, ***gekennzeichnet durch*** zwei Kammern, die an wenigstens einer ihrer Seiten jeweils zumindest teilweise **durch** ein Blech (8", 14; 10, 13) abgedeckt sind, wobei die beiden Blechabdeckungen (8", 14; 10, 13) aus demselben Material gefertigt sind und im gestreckten Zustand das eine Blech (8", 10) radial innerhalb des anderen Blechs (14, 13) angeordnet werden kann, ohne dass die beiden Bleche (8", 14; 10, 13) einander überlappen.

23. Torsionsschwingungsdämpfer nach einem der Ansprüche 17 bis 22, ***dadurch gekennzeichnet, dass*** ein Blech (8") mit einer der Massen (1, 4) fest verbunden und zwischen zwei Baugruppen (1, 4) dieser Massen fixiert ist.

24. Torsionsschwingungsdämpfer nach Anspruch 23, ***dadurch gekennzeichnet, dass*** die beiden Baugruppen (1, 4) eine Lagerschale, vorzugsweise für die zweite Masse (2), bilden.

25. Torsionsschwingungsdämpfer nach Anspruch 24, ***dadurch gekennzeichnet, dass*** das Blech (8") zumindest eine Seite der Lagerschale bildet.

26. Verfahren zur Herstellung eines Torsionsschwingungsdämpfers nach einem der Ansprüche 1 bis 25, welcher neben der mit einem viskosen Zusatzmittel gefüllten Kammer (6) zumindest eine weitere Kammern aufweist, die radial von der mit einem viskosen Zusatzmittel gefüllten Kammer beabstandet ist, wobei die beiden Kammern an wenigstens einer ihrer Seiten jeweils zumindest teilweise durch ein Blech abgedeckt sind, ***dadurch gekennzeichnet, dass*** die Blechabdeckungen (8", 14; 10, 13) aus demselben Rohling gefertigt werden bzw. dass die eine Blechabdeckung (8"; 10) aus einem Rohling gefertigt wird, aus welchem eine Blechabdeckung, die der zweiten Blechabdeckung (14; 13) entspricht, gefertigt wird.

27. Verfahren nach Anspruch 26, wobei ein Blech (10, 11) an einer der Massen (2) des Torsionsschwingungsdämpfers fixiert wird, ***dadurch gekennzeichnet, dass*** das Blech (10, 11) zunächst an der Masse (2) positioniert und anschließend derart verbördelt wird, dass zwischen Blech (10, 11) und Masse (2) ein Reibschluss entsteht.

28. Verfahren nach Anspruch 27, ***dadurch gekennzeichnet, dass*** der Reibschluss im Wesentlichen radial wirksam ist.

29. Verfahren nach einem der Ansprüche 26 bis 28, ***dadurch gekennzeichnet, dass*** das Blech (10') zunächst an einer der beiden Massen (1, 4; 2) positioniert und anschließend, wenigstens teilweise, in eine Nut (2') eingepresst wird.

30. Verfahren nach Anspruch 29, ***dadurch gekennzeichnet, dass*** die Nut im Wesentlichen radial, vorzugsweise radial nach innen, ausgerichtet ist.

31. Verfahren nach einem der Ansprüche 26 bis 30, ***dadurch gekennzeichnet, dass*** zwischen wenigstens einer Blechabdeckung (8", 14; 10, 13; 10") und einer der Baugruppen des Torsionsschwingungsdämpfers, die als Halterung für die Blechabdeckung dient, ein Dichtmittel vorgesehen ist.

## Claims

1. A torsional vibration damper having two masses that are carried so as to be adapted for rotation relative to each other (1, 4; 2) and a friction device that is active between the masses (1, 4; 2) and that comprises at least one driver wedge (5) that is disposed in a chamber (6) at least partially filled with a viscous dope, ***characterized in that*** the wedge (5) is configured as a kidney-shaped double wedge.

2. The torsional vibration damper according to claim 1, ***characterized in that*** the wedge (5) is disposed between two friction surfaces (7, 8) having substantially axial surface areas.

3. The torsional vibration damper according to claim 2, ***characterized in that*** at least one of the surface areas (7, 8) is configured as a reference cylinder at least in the region of the interaction between the wedge (5) and the friction surface (7,8).

4. The torsional vibration damper according to claim 3, ***characterized in that*** at least one of the surface areas configured as a reference cylinder is disposed in an offset parallel relation to a rotational axis of the torsional vibration damper.

5. The torsional vibration damper according to one of the claims 1 to 4, ***characterized in that*** the wedge (5) comprises at least one wedge surface shaped as a reference cylinder, the radius of which corresponds to the radius of a corresponding surface area region of the corresponding friction surface (7, 8).

6. The torsional vibration damper according to one of the claims 1 to 5, ***characterized in that*** the friction device is an additional friction device of a torsional vibration damper in which both masses (1, 4; 2) are work-connected by means of at least one spring friction device (3).

7. The torsional vibration damper according to one of the claims 1 to 6, ***characterized in that*** the friction device is configured to be rigid except for the elasticity of the wedge (3) and of the corresponding friction surfaces (7, 8) that interact with the wedge (3).

8. The torsional vibration damper according to one of the claims 1 to 7, ***characterized in that*** the double wedge comprises at least two spaced apart wedge surfaces shaped as reference cylinders and having substantially identical radiuses.

9. The torsional vibration damper according to claim 8, ***characterized in that*** both wedge surfaces are configured around the same axis.

10. The torsional vibration damper according to claim 8, ***characterized in that*** both wedge surfaces are configured around axes that are parallely offset relative to each other.

11. The torsional vibration damper according to one of the claims 8 to 10, ***characterized in that*** a recess is provided between both wedge surfaces.

12. The torsional vibration damper according to one of the claims 8 to 10, ***characterized in that*** a connection surface shaped as a reference cylinder and having a smaller radius than the radius of the wedge surfaces is provided between both wedge surfaces.

13. The torsional vibration damper according to one of the claims 1 to 12, ***characterized in that*** the double wedge is disposed in such a manner that it tilts relative to an axis of the torsional vibration damper when the two masses (1, 4; 2) are caused to move relative to each other.

14. The torsional vibration damper according to one of the claims 1 to 13, ***characterized in that*** the wedge (5) comprises at least one protrusion (9).

15. The torsional vibration damper according to claim 14, ***characterized in that*** the protrusion is provided on any side other than the wedge surface.

16. The torsional vibration damper according to claim 14 or 15, ***characterized in that*** the protrusion points in an axial direction.

17. The torsional vibration damper according to claim 1 to 16, ***characterized in that*** the chamber (6) is covered at least on one radial side at least partially by a sheet metal plate (10, 11; 10').

18. The torsional vibration damper according to one of the claims 1 to 17, ***characterized in that*** the chamber (6) is covered at least partially by a sheet metal plate (8") on at least one axial side.

19. The torsional vibration damper according to claim 17 or 18, ***characterized in that*** the sheet metal plate (10, 11; 10') comprises a raised flange (12).

20. The torsional vibration damper according to claim 19, ***characterized in that*** the sheet metal plate (10, 11; 10') is mounted to one of the masses (2) by means of the raised flange.

21. The torsional vibration damper according to one of the claims 18 to 20, ***characterized in that*** the raised flange (12) forms a substantially radial friction-type engagement between the sheet metal plate and the mass.

22. The torsional vibration damper according to one of the claims 1 to 21, ***characterized by*** two chambers that are at least partially covered on at least one of their sides by one sheet metal plate (8", 14; 10, 13) each, both sheet metal covers (8", 14; 10, 13) being produced from the same material and one sheet metal plate (8", 10) being adapted to be disposed radially inside the other sheet metal plate (14, 13) when in a stretched state, without both sheet metal plates (8", 14; 10, 13) overlapping each other.

23. The torsional vibration damper according to one of the claims 17 to 22, ***characterized in that*** a sheet metal plate (8") is firmly connected to one of the masses (1, 4) and is mounted between two construction units (1, 4) of these masses.

24. The torsional vibration damper according to claim 23, ***characterized in that*** both construction units (1, 4) form a bearing shell, preferably for the second mass (2).

25. The torsional vibration damper according to claim 24, ***characterized in that*** the sheet metal plate (8") forms at least one side of the bearing shell.

26. A method for manufacturing a torsional vibration damper according to one of the claims 1 to 25, in which the torsional vibration damper comprises, in addition to the chamber (6) filled with a viscous dope, at least one more chamber that is radially spaced from the chamber filled with a viscous dope, both chambers being at least partially covered on at least one of their sides by respectively one sheet metal plate, ***characterized in that*** the sheet metal covers (8", 14; 10, 13) are produced from the same blank or that one of the sheet metal covers (8", 10) is produced from a blank from which a sheet metal cover, corresponding to the second sheet metal cover (14, 13), is produced.

27. The method according to claim 26, a sheet metal plate (10, 11) being fixed on one of the masses (2) of the torsional vibration damper, ***characterized in that*** a sheet metal plate (10, 11) is at first placed on the mass (2) to which it is connected by a raised flange in such a manner that a friction type engagement is created between the sheet metal plate (10, 11) and the mass (2).

28. The method according to claim 27, ***characterized in that*** the friction type engagement is substantially radially active.

29. The method according to one of the claims 26 to 28, ***characterized in that*** the sheet metal plate (10') is at first placed on one of the two masses (1, 4; 2) and is then at least partially pressed into a groove (2').

30. The method according to claim 29, ***characterized in that*** the groove is oriented substantially radially, preferably radially inwards.

31. The method according to one of the claims 26 to 30, ***characterized in that*** a sealing means is provided between at least one sheet metal cover (8", 14; 10, 13; 10") and one of the construction units of the torsional vibration damper that is used as a holding device for the sheet metal cover.

## Revendications

1. Amortisseur de vibrations de torsion avec deux masses (1, 4 ; 2) montées mobiles en rotation l'une par rapport à l'autre et un dispositif de frottement agissant entre les masses (1, 4 ; 2) et qui comprenant au moins une cale (5) d'entraînement qui est disposée dans une chambre (6) au moins partiellement remplie d'un additif visqueux, ***caractérisé en ce que*** la cale (5) est conformée en forme de double cale réniforme.

2. Amortisseur de vibrations de torsion selon la revendication 1, ***caractérisé en ce que*** la cale (5) est disposée entre deux surfaces de frottement (7, 8) dont les surfaces sont sensiblement axiales.

3. Amortisseur de vibrations de torsion selon la revendication 2, ***caractérisé en ce que*** l'une au moins des surfaces (7, 8) est conformée en forme de cylindre primitif de référence du moins dans la région dans laquelle la cale (5) et la surface de frottement (7, 8) interagissent.

4. Amortisseur de vibrations de torsion selon la revendication 3, ***caractérisé en ce que*** l'une au moins des surfaces conformées en forme de cylindre primitif de référence est disposée parallèlement en décalage par rapport à un axe de rotation de l'amortisseur de vibrations de torsion.

5. Amortisseur de vibrations de torsion selon l'une quelconque des revendications 1 à 4, ***caractérisé en ce que*** la cale (5) comporte au moins une surface de cale en forme de cylindre primitif de référence, dont le rayon correspond au rayon de la région de surface correspondante de la surface de frottement correspondante (7, 8).

6. Amortisseur de vibrations de torsion selon l'une quelconque des revendications 1 à 5, ***caractérisé en ce que*** le dispositif de frottement est un dispositif de frottement supplémentaire d'un amortisseur de vibrations de torsion dans lequel les deux masses (1, 4 ; 2) sont en agissent conjointement l'une avec l'autre par l'intermédiaire d'au moins un dispositif de frottement à ressorts (3).

7. Amortisseur de vibrations de torsion selon l'une quelconque des revendications 1 à 6, ***caractérisé en ce qu'**à* l'exception de l'élasticité propre à la cale (3) et aux surfaces de frottement correspondantes (7, 8) qui interagissent avec la cale (3), le dispositif de frottements est conformé pour être rigide.

8. Amortisseur de vibrations de torsion selon l'une quelconque des revendications 1 à 7, ***caractérisé en ce que*** la double cale comporte au moins deux surfaces de cale en forme de cylindre primitif de référence qui sont distantes l'une de l'autre et ont des rayons sensiblement identiques.

9. Amortisseur de vibrations de torsion selon la revendication 8, ***caractérisé en ce que*** les deux surfaces de cale sont conformées autour du même axe.

10. Amortisseur de vibrations de torsion selon la revendication 8, ***caractérisé en ce que*** les deux surfaces de cale sont conformées autour d'axes parallèles et décalés l'un par rapport à l'autre.

11. Amortisseur de vibrations de torsion selon l'une quelconque des revendications 8 à 10, ***caractérisé en ce qu'**un* évidement est prévu entre les deux surfaces de cale.

12. Amortisseur de vibrations de torsion selon l'une quelconque des revendications 8 à 10, ***caractérisé en ce qu'**un* plan de joint en forme de cylindre primitif de référence ayant un rayon inférieur au rayon des surfaces de cale est prévu entre les deux surfaces de cale.

13. Amortisseur de vibrations de torsion selon l'une quelconque des revendications 1 à 12, ***caractérisé en ce que*** la double cale est disposée de telle manière qu'elle exécute un mouvement de bascule par rapport à un axe de l'amortisseur de vibrations de torsion lors d'un mouvement relatif des deux masses (1, 4 ; 2).

14. Amortisseur de vibrations de torsion selon l'une quelconque des revendications 1 à 13, ***caractérisé en ce que*** la cale (5) comporte au moins une saillie (9).

15. Amortisseur de vibrations de torsion selon la revendication 14, ***caractérisé en ce que*** la saillie est prévue sur un autre côté que celui de la surface de cale.

16. Amortisseur de vibrations de torsion selon la revendication 14 ou 15, ***caractérisé en ce que*** la saillie est orientée suivant la direction axiale.

17. Amortisseur de vibrations de torsion selon l'une quelconque des revendications 1 à 16, ***caractérisé en ce que*** la chambre (6) est du moins partiellement couverte sur au moins un côté radial par une tôle (10, 11 ; 10').

18. Amortisseur de vibrations de torsion selon l'une quelconque des revendications 1 à 17, ***caractérisé en ce que*** la chambre (6) est du moins partiellement couverte sur au moins un côté axial par une tôle (8").

19. Amortisseur de vibrations de torsion selon l'une quelconque des revendications 17 ou 18, ***caractérisé en ce que*** la tôle (10, 11 ; 10') comporte un bord replié (12).

20. Amortisseur de vibrations de torsion selon la revendication 19, ***caractérisé en ce que*** la tôle (10, 11 ; 10') est fixée sur l'une des masses (2) à l'aide du bord replié (12).

21. Amortisseur de vibrations de torsion selon l'une quelconque des revendications 18 à 20, ***caractérisé en ce que*** le bord replié (12) établit une liaison par friction sensiblement radiale entre la tôle et la masse.

22. Amortisseur de vibrations de torsion selon l'une quelconque des revendications 1 à 21, ***caractérisé par*** deux chambres qui sont respectivement du moins partiellement couvertes sur du moins l'un de leurs côtés par une tôle (8", 14 ; 10, 13), les deux tôles de recouvrement (8", 14 ; 10, 13) étant fabriquées à partir du même matériau et l'une des tôles (8", 10) pouvant être disposée à l'état étiré radialement à l'intérieur de l'autre tôle (14, 13) sans que les deux tôles (8", 14 ; 10, 13) ne se chevauchent.

23. Amortisseur de vibrations de torsion selon l'une quelconque des revendications 17 à *22, **caractérisé en ce qu*****'**une tôle (8") est solidement reliée à l'une des masses (1, 4) et est fixée entre deux sous-ensembles (1, 4) de ces masses.

24. Amortisseur de vibrations de torsion selon la revendications 23, ***caractérisé en ce que*** les deux sous-ensembles (1, 4) forment un coussinet de palier, de préférence pour la deuxième masse (2).

25. Amortisseur de vibrations de torsion selon la revendication 24, ***caractérisé en ce que*** la tôle (8") forme du moins un côté du coussinet de palier.

26. Procédé de fabrication d'un amortisseur de vibrations de torsion selon l'une quelconque des revendications 1 à 25, dans lequel l'amortisseur de vibrations de torsion comporte en plus de la chambre (6) remplie d'un additif visqueux au moins une chambre supplémentaire disposée radialement à distance de la chambre remplie d'un additif visqueux, les deux chambres étant respectivement du moins partiellement couvertes sur au moins un de leur côtés par une tôle, ***caractérisé en ce que*** les tôles de recouvrement (8", 14 ; 10, 13) sont réalisées à partir de la même ébauche ou que l'une des tôles de recouvrement (8", 10) est réalisée à partir d'une ébauche à partir de laquelle est réalisée une tôle de recouvrement correspondant à la deuxième tôle de recouvrement (14, 13).

27. Procédé selon la revendication 26, une tôle (10, 11) étant fixée à l'une des masses (2) de l'amortisseur de vibrations de torsion, ***caractérisé en ce que*** la tôle (10, 11) est d'abord positionnée sur la masse (2) et est ensuite agrafée de manière à réaliser une liaison par friction entre la tôle (10, 11) et la masse (2).

28. Procédé selon la revendication 27, ***caractérisé en ce que*** la liaison par friction est agit sensiblement radialement.

29. Procédé selon l'une quelconque des revendications 26 à 28, ***caractérisé en ce que*** la tôle (10') est d'abord positionnée sur l'une des deux masses (1, 4 ; 2) et est ensuite du moins partiellement pressée dans une gorge (2').

30. Procédé selon la revendication 29, ***caractérisé en ce que*** la gorge est orientée sensiblement radialement, de préférence radialement vers l'intérieur.

31. Procédé selon l'une quelconque des revendications 26 à 30, ***caractérisé en ce qu'**un* moyen d'étanchéification est prévu entre au moins une tôle de recouvrement (8", 14 ; 10, 13 ; 10") et l'un des sous-ensembles de l'amortisseur de vibrations de torsion qui sert de dispositif de retenue à la tôle de recouvrement.
